# EUROPEAN PATENT SPECIFICATION

(11) **EP 0 317 621 B1**
(45) Date of publication and mention of the grant of the patent: **22.07.1998**
(21) Application number: 88906301.2
(22) Date of filing: 27.05.1988
(51) Int. Cl.: F16C 17/03

(54) **HYDRO DYNAMIC BEARING AND METHODS OF MAKING SAME**
HYDRODYNAMISCHES LAGER UND VERFAHREN ZU DESSEN HERSTELLUNG
PALIER HYDRODYNAMIQUE ET PROCEDE DE FABRICATION

(30) Priority: 29.05.1987 US 55340
(43) Date of publication of application: 31.05.1989
(73) Proprietor: IDE, Russell, D., Exeter, RI 02822 (US)
(72) Inventor: IDE, Russell, D., Exeter, RI 02822 (US)
(74) Representative: Jack, Bruce James
(86) International application number: US8801841
(87) International publication number: WO8809443

(56) References cited:
- EP-A- 0 206 686
- FR-A- 1 010 959
- FR-A- 2 266 042
- FR-A- 2 340 470
- US-A- 1 664 878
- US-A- 2 424 028
- US-A- 3 298 751
- US-A- 3 578 827
- US-A- 3 639 014
- US-A- 3 899 224
- US-A- 3 995 357
- US-A- 4 099 799
- US-A- 4 393 563
- US-A- 4 496 251
- US-A- 4 676 668

## Description

The present invention relates to hydrodynamic bearings that are also sometimes known as swing pad bearings and methods of making the same. Generally these bearings are mounted in such a way that they can move to permit the formation of a wedge-shaped film of lubricant between the relatively moving parts. Essentially the pad displaces with a pivoting or a swing-type motion about a centre located in front of the pad surface, and bearing friction tends to open the wedge.

In the U.S.-A-2,137,487, there is shown a hydrodynamic moveable pad bearing that develops its hydrodynamic wedge by sliding of its pad along spherical surfaces. In many cases the pad sticks and the corresponding wedge cannot be developed. In the U.S.-A-3,930,691, the rocking is provided by elastomers that are subject to contamination and deterioration.

There is shown in U.S.-A-4,496,251 a pad which deflects with web-like ligaments so that a wedge shaped film of lubricant is formed between the relative moving parts.

It has also been noted in U.S.-A-4,676,668 and EP-A-0,206,686 that bearing pads may be spaced from the support member by at least one leg which provides flexibility in three directions. To provide flexibility in the plane of motion, the legs are angled inward to form a conical shape with the point of intersection in front of the pad surface. Each leg has a section modulus that is relatively small in the direction of desired motion to permit compensation for misalignments.

U.S.-A-4,099,799 discloses a hydro dynamic bearing adapted to support a shaft. The bearing comprises a cylindrical housing which defines a central bore. The shaft is adapted to pass through the central bore. There are a plurality of circumferentially arranged bearing pads located to support the shaft. Each pad comprises a shaft engaging face surface and each pad is supported by a support structure located between the pad and the housing to permit movement of the bearing pads. The support structure includes a member lying in a plane which is substantially parallel to a tangent of the bore. Each pad has axially extending and radially extending edges. One of the axially extending edges of each pad comprises a leading edge, and another axially extending edge of each pad comprises a trailing edge. The face of the pad is adapted, under the action of friction and pressure on said surface, to rock relative to the support structure, whereby the trailing edge of the face of the pad is moved radially inward toward said shaft, and the leading edge is moved radially outward away from the shaft when the shaft rotates. The support structure located between the pad and the housing is an element which is separate from the pad and separate from the housing.

The prior art arrangements are all made from a plurality of separate components that have to be assembled together.

The present invention relates to a pad type bearing and methods of making the same. The preferred pad type bearing consists of a unitary one-piece, integral cylindrical journal that has been machined or formed with small grooves and slits or cuts through or on the journal wall to define a flexible pad and a support structure capable of supporting the pad for movement in the six degrees of freedom (i.e., movement in the +x, -x, +y, -y, +z and -z directions, as well as rotation about the x, y and z axes). The support structure is unitary and comprises in various embodiments of the invention support stubs, beams, and/or membranes connected to a housing which is defined by the radially outermost portion of the bearing.

The inventor has discovered that in many specific applications such as in high speed applications, it is necessary to examine and evaluate the dynamic flexibility of the entire system consisting of the shaft or rotor, the hydrodynamic lubricating film and the bearing. In computer analysis of this system using a finite element model, it has been determined that it is necessary to treat the entire bearing as a completely flexible member that changes shape under operating loads. By adding more or less flexibility via machining of the basic structure, bearing characteristics may be achieved that provide stable low friction operation over wide operating ranges. A number of variables have been found to substantially affect the bearing's performance characteristics. Among the most important variables are the shape, size, location and material characteristics (e.g. modulus of elasticity etc.) of the pad and support members defined by the slits or cuts and grooves formed in the bearing. The shape of the support members has been found to be particularly important. Also by providing a fluid backing to the flexible members, a high degree of damping may be achieved that further adds to system stability. In some instances, this damping has replaced secondary squeeze film dampening that is present when the oil film is present between the casing of the bearing and the housing.

Specific applications of the bearing of the present invention include turbochargers, turbines and compressors/ expanders. Test speeds have exceeded 300,000 r.p.m. It is noted that in preferred embodiments the machining cuts, in addition to allowing the bearing pad to move to form a converging wedge for hydrodynamic lubrication, allow the pad itself to deflect and change shape by for example flattening. This improves operating performance by, among other things, changing the eccentricity of the bearing.

The bearings may be formed of metals, powdered metals, plastics, ceramics or composites. When manufactured in small quantities, the cuts are typically made by electrical discharge or laser machining methods and allow total design flexibility to tune the bearing to provide desired characteristics. Tuning will essentially change the stiffness that in turn eliminates vibration. Manufacture of large quantities of a single type bearing is preferably accomplished through injection moulding, casting, powdered metal die casting with sintering and extrusion or the like.

Unlike prior pad type bearings which have a support structure that is essentially oriented in the direction of load, the preferred embodiments of the present invention provide an orientation that allows for comparable deflections within a smaller envelope (i.e., the difference between the radially inner journal surface and the radially outer journal surface); allows for movement of the bearing pad in any direction (i.e., six degrees of freedom) to form a converging wedge shape; allows for the pad itself to change shape (e.g., flatten) to improve performance, and allows for development of a membrane damping system for improved stability. While there are numerous arrangements of grooves, cuts, or slits there are primarily two modes of deflections, namely one or more ligaments or membranes which deflect in the general direction of load in a bending mode and secondly by torsional deflection in a beam or member in a direction extending away from the pad along the longitudinal axis of the shaft. The degree of deflection in the bending mode is, in part, a function of the stiffness of the support structure in the radial direction. The pad itself may be made to deflect under a load to form a different shape by providing internal cuts beneath the pad or via undercutting the edges of the pad. In either case the cuts are specifically made to result in a predetermined shape under load. By surrounding or backing certain ligaments or membranes with lubricating fluid, a damping element may be added to the design.

The bearing of preferred embodiments of the present invention includes a pad that may change shape and move in any direction (i.e., is supported for movement with six degrees of freedom). The bearing also may have a built-in damping system and is of unitary or single piece construction for high volume economical manufacture. The bearing also fits in a relatively small envelope (i.e., spacing between the housing outer diameter and the pad inner diameter). Further, the need for close tolerances between the bearing inner diameter and shaft outer diameter can be obviated by dimensioning the bearing so as to eliminate the spacing between the bearing inner diameter and shaft outer diameter while at the same time dimensioning the support structure such that the radial stiffness of the bearing is less that the radial fluid film stiffness of the supporting fluid. In such an instance, an appropriate spacing between the pad and the shaft will be established instantaneously upon rotation of the shaft by virtue of the stiffness of the fluid film. In the bearing of the preferred embodiments of the present invention, the pad movement may be directed towards the shaft to hold shaft location and to give the pad the ability to adjust for misalignment of the shaft and unequal loading among pads.

A number of methods of manufacturing bearings in accordance with the present invention are also contemplated. The selection of a particular method of manufacturing depends largely on the volume of the particular bearing to be manufactured and the materials used. In low volume applications, or when it is desired to produce prototypes for testing and/or production of moulds or the like, the bearings are preferably manufactured from metallic cylindrical blanks or journals which are machined to provided radial and/or facing grooves and formed with radial cuts or slits through either numerically controlled electrical discharge manufacturing techniques or numerically controlled laser cutting techniques. In high volume applications, bearings in accordance with the present invention can be manufactured using a wide variety of materials such as plastics, ceramics, powdered and non-powdered metals, and composites. In high volume applications, a number of manufacturing methods including injection moulding, casting, powdered metal die casting, and extrusion can be employed.

According to one aspect of this invention there is provided a hydrodynamic bearing adapted to support a shaft, said bearing comprising a cylindrical housing, said housing comprising a radially outer surface, and defining a central bore, adapted to receive the shaft, there being a plurality of circumferentially arranged bearing pads located to support the shaft, each pad comprising a circumferential shaft engaging face surface, each pad being supported by a support structure located between the pad and said radially outer surface of the housing to permit movement of the bearing pads, the support structure including a member lying in a plane which is substantially parallel to a tangent of the bore, each pad having axially extending and radially extending edges, one of said axially extending edges of each pad comprising a leading edge and another axially extending edge of each pad comprising a trailing edge, the face of the pad being adapted under the action of friction and presssure on said surface to rock relative to the support structure whereby the trailing edge of the face of the pad is moved radially inward toward the shaft and the leading edge is moved radially outward away from the shaft, wherein the bearing is a unitary one-piece assembly, the housing, support structures and pads all being formed of one unitary member, the housing being formed with a plurality of radial cuts extending radially outward of a radially inner surface of the housing and a plurality of circumferential cuts in continuance of said radial cuts, said radial and circumferential cuts together defining the plurality of circumferentially arranged bearing pads and the support structures, each support structure comprising at least one integral member in the form of a beam-like member or membrane comprising the member lying in the plane substantially parallel to the tangent to the bore that supports the respective pad.

Said integral member may be a beam-like member.

Said integral beam-like member may deflect in a bending mode, and may be connected to the pad by a stub section that is at right angles to said beam-like member.

Preferably a plurality of said beam-like members extend in a circumferential direction being radially spaced from the pad.

In one embodiment said integral beam-like member twists in a torsional mode. Said integral beam-like member may comprise two beam portions which extend on a common axis away from the pad. Alternatively, a plurality of said beam-like members extend in an axial direction and are spaced from the pads.

Preferably each said bearing pad is supported on a flexible membrane, said membrane permitting the pad to move in any direction, and said membrane providing fluid damping.

Preferably a single cylindrical membrane supports all of said plurality of bearing pads.

Preferably the stub section supports said bearing pad for a movement with respect to said beam member and a housing, said beam member being supported on said housing for movement with respect thereto.

Preferably said beam is supported for pivoting movement with respect to said housing about a point which is located angularly between said leading edge and said trailing edge.

Conveniently said pads are formed and supported so as to deflect into an airfoil shape under load.

Advantageously said pads support said shaft for pivoting movement about a point proximate the centreline of the shaft to accommodate misalignment of the shaft.

Preferably said unitary support structure supports each said pad along a pad support surface, said pad support surface being spaced from axially extending and radially extending edges of the pad.

Advantageously the bearing pad is supported by the unitary support structure so as to flatten under load.

Preferably each pad is defined by said radial and circumferential cuts so as to deflect under loading, said deflections modifying the eccentricity of the bearing.

Conveniently each said pad is supported for deflection, relative to the support structure, about a point located circumferentially between said leading edge and said trailing edge.

Preferably each said pad has an axially extending circumferential centreline, said pad being supported such that loads applied thereto act at a point located between said circumferential centreline and said trailing edge.

Conveniently each of said pads is supported by said support structure to allow movement with six degrees of freedom.

Preferably each pad is supported such that under normal loading, the pad deflects such that the trailing edge is between two to five times closer to the shaft than the leading edge.

A bearing of the invention may be constructed of plastic, a ceramic material, bronze, or may be formed from a sintered powdered metal.

A bearing in accordance with the invention may further comprise a fluid lubricant located within the support structure.

Preferably said support structure supports each said bearing pad such that said bearing pad has predetermined radial stiffness, a fluid film being located between said bearing pad face and said shaft, said fluid film having a characteristic radial stiffness, wherein the radial stiffness of the fluid film is greater than the radial stiffness of the bearing pads such that said fluid film causes said bearing pads to deflect radially outward upon rotation of said shaft.

The invention also provides a method of making a bearing as defined before which comprises the steps of forming a cylindrical blank having a central axis, forming a central bore in the cylindrical blank, said central bore having a central axis which is coincident with the axis of said cylindrical blank, and forming a plurality of slits in said cylindrical blank so as to define a plurality of circumferentially spaced bearing pads which are movable radially inwardly and outwardly of said central axis on which said central bore is formed.

The method may further comprise the step of forming a plurality of slits in said cylindrical blank so as to define a unitary support structure for supporting each of said plurality of bearing pads.

The method may further comprise the step of forming a plurality of slits in said cylindrical blank so as to provide a support structure for supporting said bearing pad for movement with six degrees of freedom.

Said slits may be formed through electrical discharge machining or by laser cutting.

Alternatively said central bore and said slits may be formed by casting, by injection moulding, by powdered metal die casting with sintering, or by extrusion.

The method may further comprise the step of forming a groove around the circumference of said cylindrical blank, the groove extending radially inwardly from the exterior of the blank.

The method may further comprise the step for forming symmetrical facing grooves on the opposed circular faces of said cylindrical blank.

The details of the invention will be described, by way of example, in connection with the accompanying drawing, in which:
Fig. 1 is a sectional view of part of a journal bearing illustrating a sector thereof embodying one form of the invention;
Fig. 2 is a schematic view of a single pad comprising part of the bearing made in accordance with the example illustrated in Fig. 1;
Fig. 3 is an edge view of the pad of Fig. 2 illustrating the pad orientation with the support structure in the loaded state;
Fig. 4 is a sectional view of a sector of a second example of a journal bearing made in accordance with the present invention;
Fig. 5 is a view partly in section illustrating part of a single pad comprising part of the bearing illustrated in Fig. 4;
Fig. 5A is a perspective view generally corresponding to Figure 5, but illustrating a pad that comprises part of a modified form of the bearing of Fig. 4;
Fig. 5B is a perspective view generally corresponding to Figure 5, but illustrating another pad that comprises part of a modified form of the bearing shown in Fig. 4;
Fig. 6 is an end view of the bearing of Fig. 4;
Fig. 7 is a diagrammatic view of the torsional deflection of a beam, such as the beam shown in Figures 5 and 6, greatly enlarged;
Fig. 8 is a sectional view of part of a journal bearing illustrating an example of a bearing incorporating the features of the present invention which includes two beams;
Fig. 9 is an edge view of a pad forming part of the bearing of Fig. 1 illustrating local deflection of the pad surface without support structure deflection, greatly exaggerated;
Fig. 10 is an edge view of the pad of Fig. 8 illustrating the pad orientation with the support structure in the loaded state.
Fig. 10A is an edge view of the pad of Fig. 8 illustrating local deflection of the pad surface greatly exaggerated.
Figs. 11A and 11B are cross sectional views of a cylindrical journal or blank prior to machining;
Figs. 12A and 12B are cross sectional views of a machined journal or blank;
Figs. 13A and 13B are cross-sectional views of a further machined journal or blank;
Figs. 14A and 14B are cross sectional view of a modified machined journal or blank; and
Figs. 14C and 14D are cross sectional views of a bearing constructed from the modified machined journal or blank Figs. 14A and 14B.

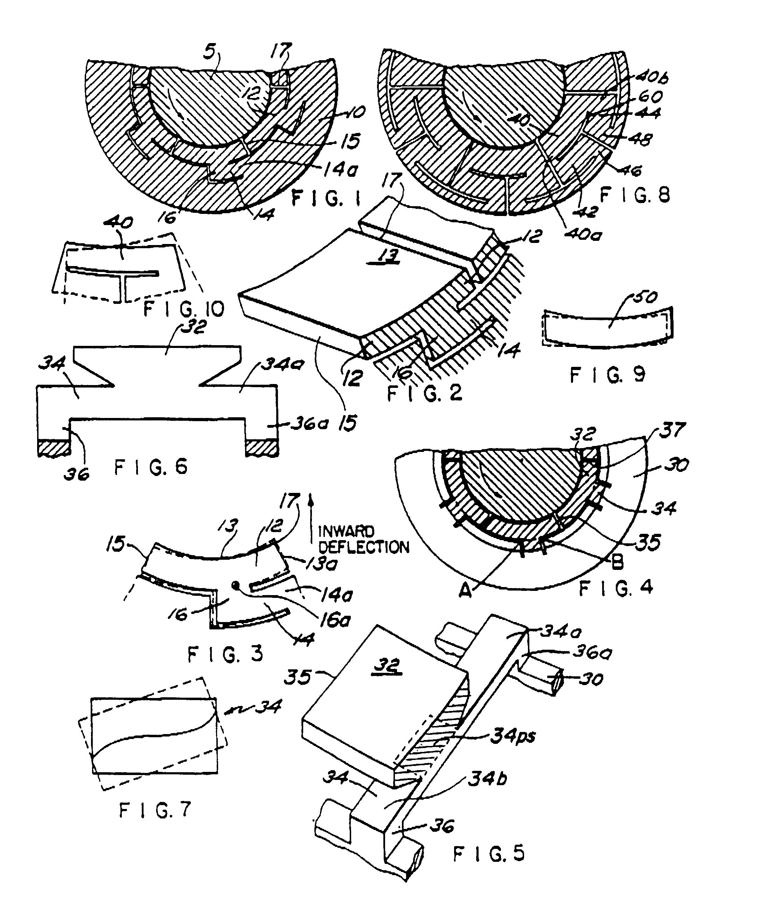

Referring first to Figure 1, the structure therein illustrated is a sector of an integral one-piece bearing assembly having grooves and slits formed therein so as to define a housing 10 and a plurality of circumferentially arranged bearing pads 12 to support a shaft 5, each of which is supported from the housing by a beam 14 and a stub section 16. The stub section 16 is at right angles to the beam 14. The beam 14 and the stub section 16 are located radially outwardly of the bearing pad 12. The beam 14 extends substantially parallel to a plane that is tangent to the shaft 5 at the line of contact with a face 13 of the respective pad 12. The stub section 16 connects the bearing pad 12 to the beam 14, and supports the bearing pad for a movement with respect to the beam 14 and the housing 10, the beam being supported on said housing 10 for movement with respect thereto.

The bearing illustrated is a radial unidirectional bearing, i.e., it is adapted for radially supporting a shaft for rotation in only one direction. In the illustrated embodiment, the bearing supports the shaft 5 only for rotation in the counter-clockwise direction illustrated by the arrow. Each bearing pad 12 includes a leading edge 15 and a trailing edge 17. The leading edge is defined as the edge first approached by a point on the circumference of the shaft as it continues to rotate. Similarly, the trailing edge is defined as the edge approached circumferentially later by the same point on the shaft as it continues to rotate. When the shaft 5 is rotating in the proper direction, it moves, on a fluid film, from the leading edge across the bearing pad and off the trailing edge. Optimum performance is obtained when the stub-section 16 supports the bearing pad 12 and hence any load, at a point 16a (Fig. 3) between the circumferential centre line 13a of the pad 12 and the trailing edge 17 preferably, closer to the centre line 13a. The beam 14 should also pivot about a point 14a which is located angularly between the leading edge and the trailing edge so that as a result of deflection of the beam 14 in a bending mode, the trailing edge 17 deflects inwardly. Of course, the degree of deflection depends on, among other things, the shape of the beam and the length of the cuts or slits formed in the bearing.

Referring now to Figs. 2 and 3, it will be seen that the pad 12 is provided with an arcuate or circumferentially curved face 13 which corresponds essentially to the radius or arc of the outer diameter of the shaft which the pad will be supporting (via the fluid film) and each pad is defined by axially extending and radially extending edges. The axially extending edges comprise the leading and trailing edges. The curved face extends between the leading edge and the trailing edge. The beam is shown both in a static position (solid lines) and in a deflected position (phantom lines) in Fig. 3. The basic construction as illustrated in Fig. 1, is created by the use of small slits or cuts through the wall. Typically these slits or radial cuts are between 0.05 mm to 1.60 mm (0.002 to 0.063") wide. The degree of deflection can be varied by varying, among other things, the length of the cuts. Longer cuts provide a longer moment arm which yields greater deflection. Shorter cuts yield beams having less flexibility and higher load carrying ability. In selecting a length of cut or slit, care must be taken to avoid resonance.

By locating the end of beam 14 as shown, the deflection downward about the connection point 16a will result in inward movement of the trailing edge 17 of the pad 12 outward movement of the leading edge 15 and a slight flattening of the pad 12 as seen in the dotted lines of Fig. 9. As a result of this deflection, the gap between the pad face 13 and the outer surface of the shaft 5, through which fluid flows, becomes wedge shaped to yield the well-known hydrodynamic support effect. Ideally the ratio of the spacing between the trailing edge and the shaft versus the spacing between the leading edge and shaft is between 1:2 to 1:5. In other words, the spacing between the leading edge and shaft should be between 2 to 5 times greater than the spacing between the trailing edge and the shaft. In order to attain this ideal spacing or wedge ratio for any specific application, appropriate deflection variables including number, size, location, shape and material characteristics of the unitary element must be selected. A computer aided finite element analysis has proven to be the most efficacious means of optimizing these variables. Computer aided analysis is particularly useful in a bearing such as the type described above which permits movement in all six directions (six degrees of freedom).

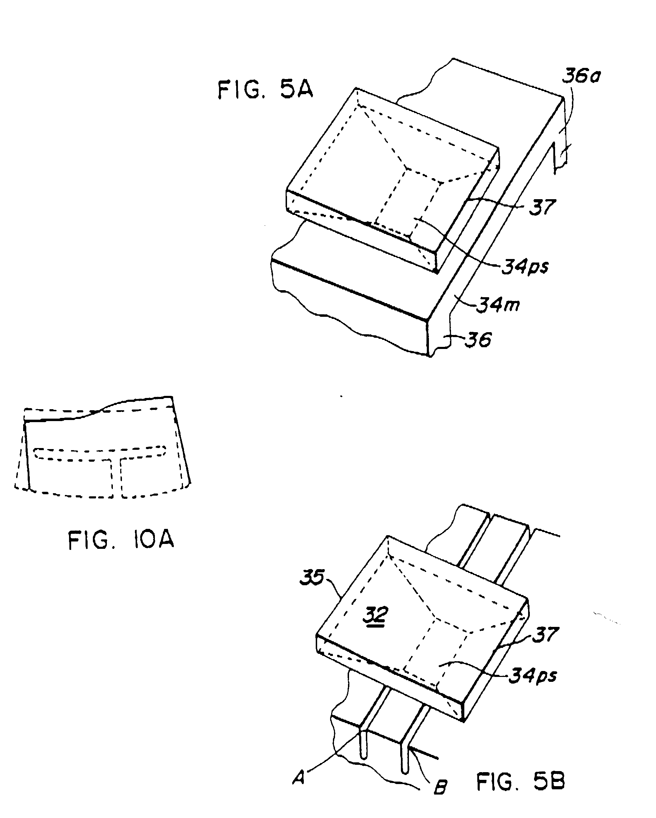

Referring to Figs. 4 and 5, there is shown a second illustrative example of a bearing incorporating features of the present invention in which the bearing is formed with slits or cuts and grooves to define a bearing housing 30 with a bearing pad 32 that is supported from the housing by an integral beam having a pair of beam portions 34a, 34b which extend substantially in a single line or on a common axis away from the pad. Moreover, the pad may be undercut so that it is supported by the beam portions only on a pad support surface 34ps which is spaced from the axially and radially extending edges of the pad. Referring to Fig. 5, it will be seen that the beam portions 34, 34a each have a convenient stub beam end 36, 36a which acts as a cantilever support for the beam.

In the embodiment illustrated there are a plurality of integral beams 34a, 34b which each extend in an axial direction, and which are spaced from the pad surfaces.

As is evident from Fig. 4, the perspective view of Fig. 5 shows only a portion of the pad 32. The complete pad is illustrated in Figs. 5A and 5B which show possible modifications of the bearings illustrated in Fig. 4. As is clear from the drawings, the pad support surfaces 34ps is located closer to the trailing edge 117 than the leading edge 35. With this construction, twisting of the beam, as illustrated in Fig. 7, will take place and create the torsional deflection illustrated. Thus, the beam twists in a torsional mode. Again the primary flexibility is developed by small cuts or slits through the bearing housing wall. These cuts provide the bearing pad with six degrees of freedom (i.e., the pad can translate in the +x, -x, +y,-y, +z and -z directions as well as rotate about the x, y and z axes). If the cuts or slits were terminated before breaking through to form beam portions 34a and 34b, the pad 32 would be supported by a continuous cylindrical membrane 34m as shown in Fig. 5A. The membrane acts as a fluid damper upon which the pad 32 is supported. The termination of the cuts would occur at Point A and Point B of Fig. 4. The flexibility of the membrane combined with the fluid lubricant, provides a means to vary the damping action and to isolate the pad from the housing. The damping takes the form of a dashpot that exhibits high damping characteristics. All of the pads 32 of the bearing are supported by a single continuous membrane. As with the bearing illustrated in Figs. 1-3, the bearing illustrated in Figs. 4-7 is a unidirectional bearing. Accordingly, the bearing has a leading edge 35 which deflects outward and a trailing edge 37 which deflects inward to form a wedge. Again, the wedge ratio (ratio of spacing between the trailing edge and the shaft to the spacing between the leading edge and the shaft) should be between 1:2 to 1:5. Moreover, the location of the centre of action of the load which is primarily determined by the location of pad support portion 34ps of the beam 34 with respect to the pad should, again, be between the circumferential centre of the pad face and the trailing edge, preferably closer to the circumferential centre of the pad face.

As shown in Fig. 5B, the beam may be defined more simply than shown in Fig. 5 by simply extending the cuts or slits downward from points A and B.

Referring to Fig. 8, there is shown the third illustrative example of an integral one-piece bearing in accordance with the present invention. In this example, internal slits or cuts are provided to create a beam on beam support structure. Specifically, the bearing is formed with grooves and slits or cuts to define a pad 40 which is supported from a housing by beams 42 and 44. The beams 42,44 extend in the circumferential direction and are radially spaced from the pad 40. The pad is connected to the beams at support stubs 40a and 40b. Beam attachment to the housing is at support stubs 46 and 48. Again the bearing consists of the thin cuts or slits shown cut through the bearing wall. The cut or slit 60 below the pad surface introduces additional flexibility such that under load the pad changes shape to form an airfoil for the introduction of lubricant. Thus, as a result of the beam on beam two point support, the pad acts as a spring like membrane.

Fig. 10A shows the deflected shape of the pad 40 under load. As shown in the drawings (exaggerated) the pad can be formed and supported so as to deflect to an airfoil shape under load. The airfoil dramatically improves performance. As is evident from the drawings, the pad is capable of displacement in the x, y, and z directions as well as rotation about the x, y, and z axes, that is, the pad has six degrees of freedom.

Referring to Fig. 9, there is shown the local inherent deflection of the face pad 50 where the pad flattens under load. The pad 50 may be present on an embodiment as described with reference to Figure 1.
These deflections are combined with the support structure deflection shown in Fig. 3 but are of a lower magnitude. The net result is the shape shown in Figs. 3 but with a face curvature that has been minutely flattened.

As noted with respect to each of the illustrative examples described above, the bearings of the present invention can be formed to provide for a wedge ratio of 1:2 to 1:5, have a deformable bearing surface the shape of which can be modified, allow six degrees of freedom of the pad, can provide a dashpot type damping action, and are of a unitary one-piece integral construction.

By virtue of the wedge formed by deflection of the bearing pad and the ability of the pad to move with six degrees of freedom, the bearing of the preferred embodiments of the present invention exhibits exceptional performance characteristics. Specifically, the bearing dimensions and deflection variables including number, size, shape, location and material characteristics of the elements defined in the unitary bearing can be tailored for any specific application to support a wide variety of loads. Of these variables, the shape of the support members is particularly important. The impact of shape of the support members on the deflection characteristics of the support structure can be appreciated when the variable formula for moment of inertia bh3/12 (English units) (the main component of sectional modulus for rectangular section, z = I/c = bh2/6) used in an example.
Moreover, the ability of the pad to move with six degrees of freedom allows the bearing to compensate for and correct shaft misalignment. Thus the pads, defined by the described radial and circumferential cuts, deflect under loading. In this regard it is noted that the bearings of the preferred embodiments of the present invention have a self correcting characteristic resulting from the tendency of the bearing to return to its nondeflected state due to the stiffness of the bearing. Of course, the stiffness of the bearing is primarily a function of the shape of the support structure, and to a lesser extent the other deflection variables including number, size, location, and material characteristics of the elements defined by the grooves and cuts or slits formed in the unitary element. Stiffer bearings have a greater self correcting tendency but are less able to adjust for shaft misalignment.

Tests have shown that bearings incorporating the features of the present invention exhibit dramatically improved performance even in comparison to the structure disclosed in my prior patent U.S-A-4,496,251. In a recent test the bearings of the present invention were utilized in a radial bearing with a radial envelope of 2.31 mm (0.091"). Inward deflections of the bearing pad were 0.0076 mm (0.0003") which provides exceptional stability and bearing performance. A comparable displacement using the arrangement shown in US-A-4,496,251 would have required a radial space of 7.6 mm (0.30").

In conventional hydrodynamic journal bearings, it is typically necessary to provide a fluid-film clearance between the bearing pad surface and the shaft outer diameter. This requires extremely close manufacturing tolerances which can present an obstacle to high volume production. However, the bearings of the present invention can be designed to obviate the need for such close manufacturing tolerances. Specifically, by providing appropriate grooves and cuts or slits, it is possible to define a bearing having virtually any desired performance characteristic. One such characteristic is the stiffness or spring characteristics of the bearing pad in the radial direction, i.e., radial stiffness. It is known in the bearing art that the fluid film between the shaft and the bearing may be modeled as a spring since it has a calculatable radial fluid film stiffness or spring characteristic. This is true for both compressible and incompressible fluids but is particularly useful in regard to gas fluid lubricants. The radial fluid film stiffness and the radial bearing stiffness act in opposition to one another such that if the radial fluid film stiffness or spring characteristic exceeds the radial bearing stiffness or spring characteristic, when the shaft rotates the bearing will deflect in the radial direction until the radial stiffness of the fluid and the bearing are in equilibrium. Thus, it has been found that if the bearing is designed such that when the shaft is stationary, the radial stiffness of the bearing is less than the radial stiffness of the fluid film, it is not necessary to provide a precise spacing between the shaft and the bearing because the radial stiffness of the fluid film will automatically and instantaneously, upon rotation of the shaft, cause appropriate outward radial deflection of the pads of the bearing. The radial stiffness of the bearing is, of course, primarily a function of the section or flexure modulus of the support structure which depends on the shape of the support structure. The radial stiffness of the bearing also depends on the length of the slits or cuts formed in the bearing. Accordingly, with the preferred embodiments of the present invention, it is possible to achieve high performance without the close manufacturing tolerances typically required of hydrodynamic bearings. This is particularly useful in high volume production of the bearings and with bearings using gas lubricating fluids.

In small quantities, the bearings disclosed herein are preferably constructed by electrical discharge machining or laser cutting methods. The double lines shown in the drawings are the actual paths of the wire or beam which is typically 0.05 to 1.52 mm (0.002-0.060") in diameter. The lubricant that flows into the electrical discharge machined paths, acts as a fluid dampener that reduces any vibration or instability at resonant frequencies. In the situations described above where a continuous cylindrical membrane is formed, the damping takes the form of a dashpot that exhibits high damping characteristics. A significant consideration in the design is that the support structure length and direction be oriented to provide the inward deflection shown in Fig. 3. Also minute deflections of the pads themselves in the direction of load as shown in Fig. 9, result in eccentricity changes which further improve bearing performance. It is noted that in "Faires, Design of Machine Elements" the distance between the centre of the bearing and the centre of the shaft is called the eccentricity of the bearing. This terminology is well known to those skilled in bearing design. With the novel approach of tuning or modifying the stiffness of the bearing configuration or structure and particularly the beam to suit a particular bearing application, optimum performance is readily obtained. Recent computer analysis has demonstrated that virtually any stiffness or deflection may be accomplished.

As noted above, when manufacturing low volumes or prototypes of the bearings of the present invention, the bearings are preferably constructed by electrical discharge machining or laser cutting methods. Such small volumes or prototypes are usually constructed of metal. However, when high volume production of a particular bearing is contemplated, other methods of manufacture such as injection moulding, casting, powdered metal die casting and extrusion are more economical. in connection with such manufacturing methods, it may be more economical to employ plastics, ceramics, sintered powdered metals, bronze or composites to form the bearings of the present invention. It is believed that methods such as injection moulding, casting, powdered metal die casting with sintering and extrusion are sufficiently well known that the processes need not be detailed herein. It is also believed that once a prototype bearing is constructed, the method of producing a mould or the like for mass production of the bearing is well known to those skilled in the moulding and casting art. Moreover, it is to be understood that only certain types of the bearings of the present invention are adapted to be made in high volumes through extrusion. Generally, these are the bearings that are formed only through the provision of circumferential grooves and radial and circumferential cuts or slits which extend axially throughout the entire bearing.

With the foregoing in mind, it is believed sufficient to describe the method of making a single bearing through the use of electrical discharge manufacturing and machining. It is believed that a description of such manufacture demonstrates the ease with which the relatively complex bearing shapes of preferred embodiments of the present invention can be achieved.

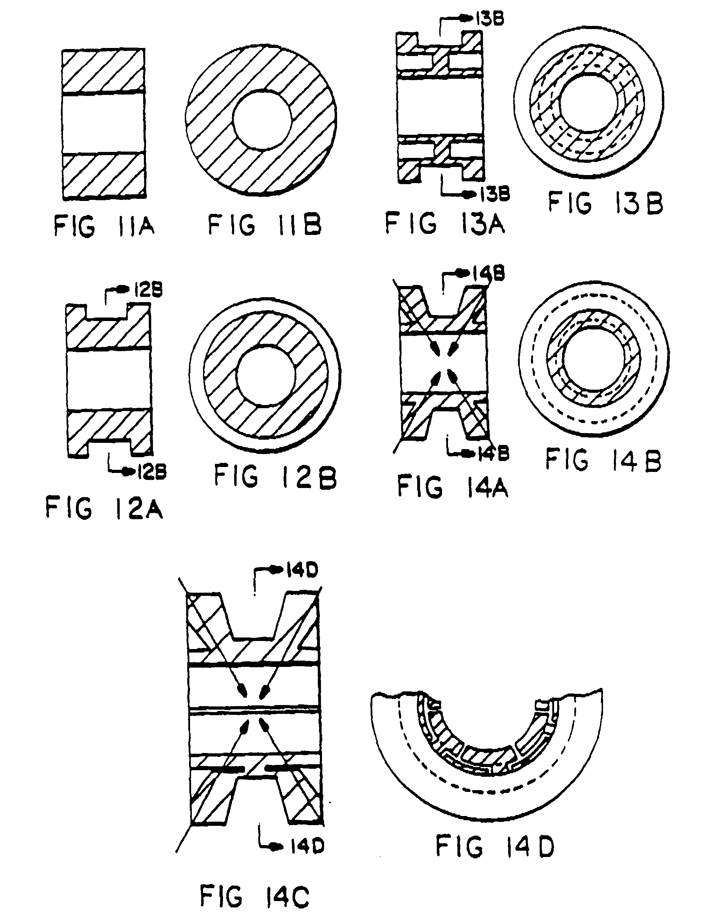

Each bearing is initially in the form of a cylindrical blank having a cylindrical bore which is coincident with the axis of the cylindrical blank as shown in Figs. 11A and 11B. The blank is then machined to provide a radial lubricating fluid groove as shown in Figs. 12A and 12B. For certain applications, it is desirable to further machine the blank to include facing grooves which are preferably symmetrically disposed on the radial faces of the bearings as shown in Figs. 13 and 13B. The provision of such facing grooves ultimately results in a bearing which is easily torsionally deflected. While the groove shown in Figs. 13A and 13B are cylindrical, it is possible to provide tapered grooves as shown in Figs. 14A and 14B. As will become evident below, this yields a bearing which exhibits improved deflection characteristics by virtue of the angled alignment of the support beams. In this context, it should be noted that it is preferable that the support beams as viewed in Fig. 14A are tapered along lines which converge at a point proximate the centre line of the shaft. This ensures that flexibility occurs about the shaft centre line by establishing a centre of action for the entire system such that the pads may adjust to shaft misalignment. In essence, the tapering of the support beams causes the bearing to act in a manner similar to a spherical bearing by concentrating the support forces on a single point about which the shaft may pivot in all directions to correct any misalignment. The arrows in Fig. 14A illustrate the lines of action of the deflection. In other words, the pads support the shaft for pivoting movement about a point proximate the centre line of the shaft to accommodate misalignment of the shaft.

After the cylindrical blank is properly machined as shown in Figs. 12A and 12B, Figs. 13A and 13B, or Figs. 14A and 14B radial and/or circumferential slits or grooves are formed along the radial face of the machined blank to define the bearing pads, the beam supports and the housing. The bearing pads are movable radially inwardly and outwardly relative to the axis of the central bore. Figures 14C and 14D illustrate such grooves formed in the machined blank of Figs. 14A and 14B. When manufacturing low volumes of the bearings or prototypes of the bearings for use in the construction of a mould, the cuts or slits are preferably formed through electrical discharge machining or through the use of a laser to effect laser cutting. The machining of the cylindrical blanks to achieve the configurations illustrated in Figs. 12A and 12B, Figs. 13A and 13B, Figs. 14A and 14B or a similar shape can be done through conventional machine tools such as lathes or the like.

The performance characteristics of the bearings of the preferred embodiments of the present invention results from the relative shape, size, location and material characteristics of the bearing pads and the beam supports defined by the cuts or slits formed in the machined blank. These parameters are largely defined by the dimensions and location of the radial circumferential cuts or slits formed in the bearing in conjunction with the shape of the machined blank in which the slits are formed to yield the bearing.

As noted above, while the construction of the bearings of the present invention is most easily understood by reference to the machining process, large scale production of the bearings contemplated by the present invention could be more economically performed through injection moulding, casting, powdered metal die casting with sintering, extrusion or the like.

In extruding a large number of bearings from a pipe-like cylindrical blank, radial lubricating fluid grooves as shown in Figs. 12A and 12B can be provided along the length of the pipe-like cylindrical blank prior to extrusion. However, if facing grooves were desired in the bearing, these can be individually defined after slicing the individual bearings from the extruded and machined blank. For this reason, extrusion might not be a preferred method for producing bearings which require facing grooves to enhance torsional flexibility.

## Claims

1. A hydrodynamic bearing adapted to support a shaft(5), said bearing comprising a cylindrical housing(10), said housing comprising a radially outer surface, and defining a central bore, adapted to receive the shaft(5), there being a plurality of circumferentially arranged bearing pads(12) located to support the shaft(5), each pad comprising a circumferential shaft engaging face surface(13), each pad being supported by a support structure(14,16) located between the pad and said radially outer surface of the housing to permit movement of the bearing pads, the support structure including a member(14) lying in a plane which is substantially parallel to a tangent of the bore, each pad having axially extending and radially extending edges, one of said axially extending edges of each pad comprising a leading edge(15) and another axially extending edge of each pad comprising a trailing edge(17), the face of the pad being adapted under the action of friction and presssure on said surface to rock relative to the support structure whereby the trailing edge of the face of the pad is moved radially inward toward the shaft and the leading edge is moved radially outward away from the shaft(5), characterised in that the bearing is a unitary one-piece assembly, the housing(10), support structures(16) and pads(12) all being formed of one unitary member, the housing(10) being formed with a plurality of radial cuts extending radially outward of a radially inner surface of the housing and a plurality of circumferential cuts in continuance of said radial cuts, said radial and circumferential cuts together defining the plurality of circumferentially arranged bearing pads(12) and the support structures(14,16), each support structure comprising at least one integral member(14) in the form of a beam-like member or membrane comprising the member lying in the plane substantially parallel to the tangent to the bore that supports the respective pad(12).

2. A bearing as claimed in Claim 1 wherein said integral member is a beam-like member(14).

3. A bearing as in Claim 2 wherein said integral beam-like member(14) deflects in a bending mode.

4. A bearing as in Claim 2 or 3 wherein said beam-like member(14) is connected to the pad(12) by a stub section(16) that is at right angles to said beam-like member.

5. A bearing as in Claim 2, 3 or 4 wherein a plurality of said beam-like members(42,44) extend in a circumferential direction and are radially spaced from the pad(40).

6. A bearing as in Claim 2 wherein said integral beam-like member twists in a torsional mode.

7. A bearing as in Claim 2 or Claim 6 wherein said integral beam-like member comprises two beam portions(34a,34b) which extend on a common axis away from the pad(32).

8. A bearing as in Claim 2, Claim 6 or Claim 7 wherein a plurality of said beam-like members extend in an axial direction and are spaced from the pads.

9. A bearing according to Claim 1 wherein each said bearing pad is supported on a flexible membrane, said membrane(34m) permitting the pad to move in any direction, and said membrane providing fluid damping.

10. A bearing as in Claim 9 wherein a single cylindrical membrane supports all of said plurality of bearing pads.

11. A bearing for supporting a shaft, according to Claim 4, wherein the stub section(16) supports said bearing pad for a movement with respect to said beam member and the housing(10), said beam member being supported on said housing for movement with respect thereto.

12. A bearing as in Claim 11 wherein said beam is supported for pivoting movement with respect to said housing about a point(14A) which is located angularly between said leading edge(15) and said trailing edge(17).

13. A bearing as in any one of the preceding Claims wherein said pads(12) are formed and supported so as to deflect into an airfoil shape under load.

14. A bearing as in any one of the preceding Claims wherein said pads(12) support said shaft(5) for pivoting movement about a point proximate the centreline of the shaft to accommodate misalignment of the shaft.

15. A bearing as in any one of the preceding Claims wherein said unitary support structure supports each said pad(32) along a pad support surface(34ps), said pad support surface being spaced from axially extending and radially extending edges of the pad(32).

16. A bearing as in any one of the preceding Claims wherein the bearing pad is supported by the unitary support structure so as to flatten under load.

17. A bearing as in any one of the preceding Claims wherein each pad(12) is defined by said radial and circumferential cuts so as to deflect under loading, said deflections modifying the eccentricity of the bearing.

18. A bearing as in any one of the preceding Claims wherein each said pad(12) is supported for deflection, relative to the support strucutre, about a point(16A) located circumferentially between said leading edge(12) and said trailing edge(15).

19. A bearing as in any one of the preceding Claims wherein each said pad(12) has an axially extending circumferential centreline(13A), said pad being supported such that loads applied thereto act at a point(16A) located between said circumferential centreline and said trailing edge(17).

20. A bearing as in any one of the preceding Claims wherein each of said pads(12) is supported by said support structure to allow movement with six degrees of freedom.

21. A bearing as in any one of the preceding Claims wherein each pad(12) is supported such that under normal loading, the pad deflects such that the trailing edge(17) is between two to five times closer to the shaft than the leading edge(13).

22. A bearing as in any one of Claims 1 to 21 wherein said bearing is constructed of plastic.

23. A bearing as in any one of Claims 1 to 21 wherein said bearing is constructed of a ceramic material.

24. A bearing as in any one of Claims 1 to 21 wherein said bearing is constructed of bronze.

25. A bearing as in any one of Claims 1 to 21 wherein said bearing is formed from a sintered powdered metal.

26. A bearing as in any one of the preceding Claims further comprising a fluid lubricant located within the support structure.

27. A bearing according to Claim 26 wherein said support structure supports each said bearing pad(12) such that said bearing pad has predetermined radial stiffness, a fluid film being located between said bearing pad face and said shaft, said fluid film having a characteristic radial stiffness, wherein the radial stiffness of the fluid film is greater than the radial stiffness of the bearing pads such that said fluid film causes said bearing pads to deflect radially outward upon rotation of said shaft.

28. A method of making a bearing according to any one of the preceding Claims characterised in that the method comprises the steps of forming a cylindrical blank having a central axis, forming a central bore in the cylindrical blank, said central bore having a central axis which is coincident with the axis of said cylindrical blank, and forming a plurality of slits in said cylindrical blank so as to define a plurality of circumferentially spaced bearing pads(12) which are movable radially inwardly and outwardly of said central axis on which said central bore is formed.

29. The method of Claim 28 further comprising the step of forming a plurality of slits in said cylindrical blank so as to define a unitary support structure for supporting each of said plurality of bearing pads.

30. The method of Claim 28 or 29 further comprising the step of forming a plurality of slits in said cylindrical blank so as to provide a support structure for supporting said bearing pad for movement with six degrees of freedom.

31. The method of any one of Claims 29 to 30 wherein said slits are formed through electrical discharge machining.

32. The method of any one of Claims 28 to 30 wherein said slits are formed by laser cutting.

33. The method of any one of Claims 28 to 30 wherein said central bore and said slits are formed by casting.

34. The method of any one of Claims 28 to 30 wherein said central bore and said slits are formed by injection moulding.

35. The method any one of Claims 28 to 30 wherein said central bore and said slits are formed by powdered metal die casting with sintering.

36. The method of any one of Claims 28 to 30 wherein said central bore and slits are formed by extrusion.

37. The method of any one of Claims 28 to 36 further comprising the step of forming a groove around the circumference of said cylindrical blank, the groove extending radially inwardly from the exterior of the blank.

38. The method of any one of Claims 30 to 39 further comprising the step for forming symmetrical facing grooves on the opposed circular faces of said cylindrical blank.

## Patentansprüche

1. Hydrodynamisches Lager, bestimmt zum Tragen einer Welle (5), wobei das Lager ein zylindrisches Gehäuse (10) beinhaltet, das eine radial außenliegende Fläche aufweist, und eine zentrale Bohrung festlegt, die dazu bestimmt ist, die Welle (5) aufzunehmen, wobei eine Anzahl in Umfangsrichtung angeordneter Lagerpolster (12) vorhanden ist, die so angeordnet sind, um die Welle (5) abzustützen, jedes Polster eine mit der Welle zusammenwirkende Umfangsstirnfläche (13) aufweist, jedes Polster von einer Stützstruktur (14, 16) abgestützt ist, die sich zwischen dem Polster und der radial außenliegenden Fläche des Gehäuses befindet, um eine Bewegung der Lagerpolster zu ermöglichen, die Stützstruktur ein Element (14) beinhaltet, das in einer Ebene liegt, die im wesentlichen parallel zu einer Tangente der Bohrung ist, jedes Polster axial verlaufende und radial verlaufende Kanten aufweist, eine der axial verlaufenden Kanten eines jeden Polsters eine Vorderkante (15) und eine andere axial verlaufende Kante eines jeden Polsters eine Hinterkante (17) ist, die Stirnfläche des Polsters dazu bestimmt ist, unter der Wirkung von Reibung und Druck auf diese Fläche relativ zu der Stützstruktur zu pendeln, wodurch die Hinterkante der Stirnfläche des Polsters radial einwärts zur Welle hin bewegt wird und die Vorderkante radial auswärts weg von der Welle (5) bewegt wird, dadurch gekennzeichnet, daß das Lager eine einheitliche, einteilige Anordnung ist, wobei das Gehäuse (10), Tragstrukturen (16) und Polster (12) alle aus einem einheitlichen Teil bestehen, wobei das Gehäuse (10) mit einer Anzahl radialer Einschnitte versehen ist, die sich radial auswärts von einer radial inneren Fläche des Gehäuses erstrecken, und einer Anzahl von Umfangseinschnitten in Fortsetzung der radialen Einschnitte, wobei die Radial- und Umfangseinschnitte zusammen die Anzahl von in Umfangsrichtung angeordneten Lagerpolstern (12) und die Tragstrukturen (14, 16) bilden, wobei jede Tragstruktur zumindest aus einem einteiligen Element (14) in Form eines strebenartigen Teils oder einer das Teil bildenden Membran besteht, in der Ebene liegend, die im wesentlichen parallel zu der Tangente an die Bohrung ist, die das jeweilige Polster (12) trägt.

2. Lager nach Anspruch 1, dadurch gekennzeichnet, daß das einteilige Element ein strebenartiges Element (14) ist.

3. Lager nach Anspruch 2, dadurch gekennzeichnet, daß das einteilige strebenartige Element (14) in einem Biegemodus nachgibt.

4. Lager nach Anspruch 2 oder 3, dadurch gekennzeichnet, daß das strebenartige Teil (14) mit dem Polster (12) mittels eines Stutzenabschnitts (16) verbunden ist, der rechtwinklig zu dem strebenartigen Element ist.

5. Lager nach Anspruch 2, 3 oder 4, dadurch gekennzeichnet, daß sich eine Mehrzahl der strebenartigen Elemente (42, 44) in einer Umfangsrichtung erstreckt, wobei sie radial von dem Polster (40) beabstandet sind.

6. Lager nach Anspruch 2, dadurch gekennzeichnet, daß sich das einteilige strebenartige Element in einem Torsionsmodus verwindet.

7. Lager nach Anspruch 2 oder 6, dadurch gekennzeichnet, daß das einteilige strebenartige Element aus zwei Strebenabschnitten (34a, 34b) besteht, die sich auf einer gemeinsamen Achse von dem Polster (32) weg erstrecken.

8. Lager nach Anspruch 2, 6 oder 7, dadurch gekennzeichnet, daß sich eine Mehrzahl der strebenartigen Elemente in einer axialen Richtung erstrecken und von den Polstern beabstandet sind.

9. Lager nach Anspruch 1, dadurch gekennzeichnet, daß jedes Lagerpolster auf einer flexiblen Membran (34m) abgestützt ist, die eine Bewegung des Polsters in jeder Richtung zuläßt und eine Fluiddämpfung bereitstellt.

10. Lager nach Anspruch 9, dadurch gekennzeichnet, daß eine einzelne zylindrische Membran die Mehrzahl der Lagerpolster trägt.

11. Lager zum Abstützen einer Welle nach Anspruch 4, dadurch gekennzeichnet, daß der Stutzenabschnitt (16) das Lagerpolster für eine Bewegung bezüglich des Strebenelements und des Gehäuses (10) trägt, wobei das Strebenelement auf dem Gehäuse für eine Bewegung bezüglich desselben abgesützt ist.

12. Lager nach Anspruch 11, dadurch gekennzeichnet, daß die Strebe zur Schwenkbewegung bezüglich des Gehäuses um einen Punkt (14A) abgestützt ist, der sich in Winkelrichtung zwischen der Vorderkante (15) und der Hinterkante (17) befindet.

13. Lager nach einem der vorangehenden Ansprüche, dadurch gekennzeichnet, daß die Polster (12) so ausgebildet und abgestützt sind, daß sie sich unter Belastung in Tragflächenform verformen.

14. Lager nach einem der vorangehenden Ansprüche, dadurch gekennzeichnet, daß die Polster (12) die Welle (5) zur Schwenkbewegung um einen Punkt in der Nähe der Mittellinie der Welle tragen, um eine Fehlausrichtung der Welle aufzunehmen.

15. Lager nach einem der vorangehenden Ansprüche, dadurch gekennzeichnet, daß die einheitliche Stützstruktur jedes Polster (32) entlang einer Polsterstützfläche (34ps) trägt, wobei die Polsterstützfläche von axial und radial verlaufenden Rändern des Polsters (32) beabstandet ist.

16. Lager nach einem der vorangehenden Ansprüche, dadurch gekennzeichnet, daß das Lagerpolster von der einteiligen Stützstruktur so abgestützt ist, daß es sich unter Belastung abflacht.

17. Lager nach einem der vorangehenden Ansprüche, dadurch gekennzeichnet, daß jedes Polster durch die Radial- und Umfangseinschnitte so festgelegt ist, daß es sich unter Belastung durchbiegt, wobei die Durchbiegungen die Exzentrizität des Lagers modifizieren.

18. Lager nach einem der vorangehenden Ansprüche, dadurch gekennzeichnet, daß jedes Polster (12) zum Durchbiegen abgestützt ist, relativ zu der Stützstruktur, um einen Punkt (16A), der in Umfangsrichtung zwischen der Vorderkante (12) und der Hinterkante (15) liegt.

19. Lager nach einem der vorangehenden Ansprüche, dadurch gekennzeichnet, daß jedes Polster (12) eine axial verlaufende Umfangs-Mittellinie (13A) hat, wobei das Polster so abgestützt ist, daß aufgebrachte Belastungen an einem Punkt (16A) wirken, der zwischen der Umfangs-Mittellinie und der Hinterkante (17) liegt.

20. Lager nach einem der vorangehenden Ansprüche, dadurch gekennzeichnet, daß jedes Polster (12) durch die Stützstruktur abgestützt ist, um eine Bewegung mit sechs Freiheitsgraden zu ermöglichen.

21. Lager nach einem der vorangehenden Ansprüche, dadurch gekennzeichnet, daß jedes Polster (12) so abgestützt ist, daß das Polster unter normaler Belastung so nachgibt, daß die Hinterkante (17) zwei bis fünf Mal näher an der Welle liegt als die Vorderkante (13).

22. Lager nach einem der Ansprüche 1 bis 21, dadurch gekennzeichnet, daß das Lager aus Kunststoff aufgebaut ist.

23. Lager nach einem der Ansprüche 1 bis 21, dadurch gekennzeichnet, daß das Lager aus einem keramischen Werkstoff aufgebaut ist.

24. Lager nach einem der Ansprüche 1 bis 21, dadurch gekennzeichnet, daß das Lager aus Bronze aufgebaut ist.

25. Lager nach einem der Ansprüche 1 bis 21, dadurch gekennzeichnet, daß das Lager aus einem gesinterten Pulvermetall hergestellt ist.

26. Lager nach einem der vorangehenden Ansprüche, dadurch gekennzeichnet, daß das Lager einen flüssigen Schmierstoff aufweist, der sich innerhalb der Stützstruktur befindet.

27. Lager nach Anspruch 26, dadurch gekennzeichnet, daß die Stützstruktur jedes Lagerpolster (12) so abstützt, daß das Lagerpolster eine vorbestimmte radiale Steifigkeit aufweist, wobei sich ein Fluidfilm zwischen der Lagerpolsterstirnfläche und der Welle befindet, der eine charakteristische radiale Steifigkeit hat, wobei die radiale Steifigkeit des Fluidfilms größer als die radiale Steifigkeit der Lagerpolster ist, so daß der Fluidfilm die Lagerpolster dazu veranlaßt, bei Drehung der Welle radial auswärts nachzugeben.

28. Verfahren zum Herstellen eines Lagers nach einem der vorangehenden Ansprüche, dadurch gekennzeichnet, daß das Verfahren die Schritte umfaßt, einen zylindrischen Rohling mit einer Mittelachse herzustellen, eine zentrale Bohrung in dem zylindrischen Rohling auszubilden, wobei die Mittelachse der Bohrung mit der Achse des zylindrischen Rohlings übereinstimmt, und eine Anzahl von Schlitzen in dem zylindrischen Rohling auszubilden, um eine Anzahl von in Umfangsrichtung beabstandeten Lagerpolstern (12) zu bilden, die radial einwärts und auswärts von der Mittelachse beweglich sind, um die die zentrale Bohrung ausgebildet ist.

29. Verfahren nach Anspruch 28, dadurch gekennzeichnet, daß eine Mehrzahl von Schlitzen in dem zylindrischen Rohling ausgebildet werden, um eine einteilige Stützstruktur zum Abstützen eines jeden aus der Mehrzahl von Lagerpolstern zu bildend.

30. Verfahren nach Anspruch 28 oder 29, dadurch gekennzeichnet, daß eine Anzahl von Schlitzen in dem zylindrischen Rohling ausgebildet wird, um eine Stützstruktur zum Abstützen des Lagerpolsters zur Bewegung mit sechs Freiheitsgraden zu bilden.

31. Verfahren nach Anspruch 29 oder 30, dadurch gekennzeichnet, daß die Schlitze durch elektrische Entladungsbearbeitung hergestellt werden.

32. Verfahren nach einem der Ansprüche 28 bis 30, dadurch gekennzeichnet, daß die Schlitze durch Laserschneiden hergesteilt werden.

33. Verfahren nach einem der Ansprüche 28 bis 30, dadurch gekennzeichnet, daß die zentrale Bohrung und die Schlitze durch Gießen hergestellt werden.

34. Verfahren nach einem der Ansprüche 28 bis 30, dadurch gekennzeichnet, daß die zentrale Bohrung und die Schlitze durch Spritzgießen hergestellt werden.

35. Verfahren nach einem der Ansprüche 28 bis 30, dadurch gekennzeichnet, daß die zentrale Bohrung und die Schlitze durch Pulvermetall-Formgießen mit Sintern hergestellt werden.

36. Verfahren nach einem der Ansprüche 28 bis 30, dadurch gekennzeichnet, daß die zentrale Bohrung und die Schlitze durch Extrusion hergestellt werden.

37. Verfahren nach einem der Ansprüche 28 bis 36, dadurch gekennzeichnet, daß eine Nut um den Umfang des zylindrischen Rohlings ausgebildet wird, die sich radial einwärts von der Außenseite des Rohlings erstreckt.

38. Verfahren nach einem der Ansprüche 30 bis 39, dadurch gekennzeichnet, daß symmetrische, einander gegenüberstehende Nuten auf den gegenüberstehenden kreisförmigen Flächen des zylindrischen Rohlings ausgebildet werden.

## Revendications

1. Palier hydrodynamique adapté à supporter un arbre (5), ledit palier comprenant un logement cylindrique (10)comportant une surface extérieure radiale définissant un alésage central adapté à la réception de l'arbre (5), une pluralité de patins (12) disposes circonférenciellement, situés dans cet alésage pour supporter l'arbre (5), chaque patin comprenant une surface (13) venant en prise sur la circonférence de l'arbre et étant porté par une structure de support (14, 16) située entre le patin et la surface extérieure radiale du logement afin de permettre un déplacement de ces patins, la structure de support comprenant un élément (14) se trouvant dans un plan sensiblement parallèle à une tangente de l'alésage, chaque patin ayant des bords se prolongeant axialement et radialement, l'un des deux bords de chaque patin se prolongeant axialement comprenant un bord d'attaque (15) et un bord de fuite (17), la face du patin étant adaptée de sorte que, sous l'action d'un frottement et d'une pression sur cette surface, elle bascule vis-à-vis de la structure de support à la suite de quoi le bord de fuite est déplacé radialement vers l'intérieur en direction de l'arbre et le bord d'attaque est déplacé radialement vers l'extérieur en s'éloignant de l'arbre (5), caractérisé en ce que le palier forme un assemblage unitaire d'un seul tenant, le logement (10), les structures de support (16) et les patins (12) étant tous formée d'un seul bloc, le logement (10) comprenant une pluralité d'entailles se prolongeant radialement vers l'extérieur de la surface intérieure radiale du logement et d'une pluralité d'entailles circonférentielles en continuation des entailles radiales, ces entailles radiales et circonférentielles définissant ensemble la pluralité des patins du palier disposés en cercle (12) et les structures de support (14, 16), chaque structure de support faisant partie intégrante d'au moins un élément (14) analogue à une poutre ou une membrane comprenant l'élément se trouvant dans le plan essentiellement parallèle à la tangente à l'alésage qui supporte le patin respectif (12).

2. Palier selon la revendication 1, dans lequel l'élément faisant partie intégrante est analogue à une poutre (14).

3. Palier selon la revendication 2, dans lequel ledit élément faisait partie intégrante est analogue à une poutre (14), et est déformé en flexion.

4. Palier selon l'une des revendications 2 ou 3, dans lequel ledit élément analogue à une poutre (14) est relié au patin (12) par une section d'ergot (16), qui se trouve à angle droit par rapport audit élément.

5. Palier selon l'une des revendication 2, 3 ou 4, dans lequel une pluralité d'éléments (42, 44) analogues des poutres se prolongent dans une direction circonférentielle et sont espacés radialement du patin (40).

6. Palier selon la revendication 2, dans lequel l'élément analogue à une poutre est déformé en torsion.

7. Palier selon la revendication 2 ou selon la revendication 6. dans lequel l'élément analogue à une poutre comprend deux parties (34a, 34b) qui se prolongent sur un axe commun, éloigné du patin (32).

8. Palier selon la revendication 2, la revendication 6 ou la revendication 7, dans lequel une pluralité des éléments analogues à une poutre se prolongent dans une direction axiale et sont espacés des patins.

9. Palier selon la revendication 1, dans lequel chacun des patins de Palier est soutenu par une membrane souple (34m), permettant au patin de se déplacer dans une direction quelconque, cette membrane fournissant un amortissement fluide.

10. Palier selon la revendication 9, dans lequel une membrane cylindrique unique soutient l'ensemble des patins.

11. Palier pour soutenir un arbre, selon la revendication 4, dans lequel la section d'ergot (16) supporte le patin en vue d'un déplacement par rapport à l'élément de poutre et au logement (10), cet élément de poutre étant supporté par le logement pour un déplacement par rapport à celui-ci.

12. Palier selon la revendication 11, dans lequel la poutre est supportée en vue d'un mouvement pivotant par rapport au logement autour d'un point (14A), situé angulairement entre le bord d'attaque (15) et le bord de fuite (17).

13. Palier selon l'une quelconque des revendications précédentes, dans lequel les patins (12) sont formés et supportés de sorte qu'ils sont fléchis selon une surface portante sous charge.

14. Palier selon l'une quelconque des revendications précédentes, dans lequel les patins (12) supportent l'arbre (5) en vue d'un déplacement pivotant autour d'un point à proximité de l'axe de cet arbre, afin de s'adapter à un mauvais alignement de celui-ci.

15. Palier selon l'une quelconque des revendications précédentes, dans lequel la structure de support unitaire soutient chacun des patins (32) le long d'une surface (34 ps), cette surface étant espacée des bords se prolongeant axialement et radialement (32).

16. Palier selon l'une quelconque des revendications précédentes, dans lequel le patin est supporté par la structure de soutien unitaire de sorte qu'elle s'aplatit sous une charge.

17. Palier selon l'une quelconque des revendications précédentes, dans lequel chaque patin (12) est défini par les entailles radiales et circonférentielles, de sorte qu'il fléchit sous une charge, ces déflexions modifiant l'excentricité du palier.

18. Palier selon l'une quelconque des revendications précédentes, dans lequel chacun des patins (12) est supporté en vue d'une déflexion par rapport à la structure de support, autour d'un point (16A), situé en circonférence entre le bord d'attaque (12) et le bord de fuite (15).

19. Palier selon l'une quelconque des revendications précédentes, dans lequel chacun des patins (12) possède une ligne médiane (13A), circonférentielle, se prolongeant axialement, le patin étant soutenu de sorte que les charges qui lui sont appliquées agissent au niveau d'un point (16A) situé entre la ligne médiane circonférentielle et le bord de fuite (17).

20. Palier selon l'une quelconque des revendications précédentes, dans lequel chacun des patins (12) est supporté par la structure de soutien afin de permettre un déplacement à six degrés de liberté.

21. Palier selon l'une quelconque des revendications précédentes, dans lequel chaque patin (12) est soutenu de sorte que, sous une charge normale, ce patin est défléchi de telle sorte que le bord de fuite (17) se trouve de deux à cinq fois plus près de l'arbre que le bord d'attaque (13).

22. Palier selon l'une quelconque des revendications 1 à 21, construit en matière plastique.

23. Palier selon l'une quelconque des revendications 1 à 21, construit en une matière céramique.

24. Palier selon l'une quelconque des revendications 1 à 21, construit en bronze.

25. Palier selon l'une quelconque des revendications 1 à 21, formé à partir d'un métal en poudre fritté.

26. Palier selon l'une quelconque des revendications précédentes, comprenant de plus un lubrifiant fluide situé dans la structure de support.

27. Palier selon la revendication 26, dans lequel la structure de support soutient chacun des patins (12) de sorte que celle-ci possède une rigidité radiale prédéterminée, un film fluide étant situé entre la face du patin et l'arbre, ce film fluide ayant une rigidité radiale caractéristique supérieure à la rigidité radiale des patins de sorte que le film fluide provoque une déflexion radiale vers l'extérieur des patins lors d'une rotation de l'arbre.

28. Procédé de fabrication d'un palier selon l'une quelconque des revendications précédentes, caractérisé en ce qu'il comprend les étapes consistant à former une ébauche cylindrique ayant un axe central, puis un alésage central dans l'ébauche cylindrique, cet alésage central ayant un axe qui coïncide avec l'axe de l'ébauche cylindrique, et à former une pluralité de fentes dans l'ébauche de façon à définir une pluralité de patins espacés en circonférence (12), déplaçables radialement vers l'intérieur et vers l'extérieur par rapport à l'axe central sur lequel l'alésage central est formé.

29. Procédé selon la revendication 28, comprenant de plus l'étape consistant à former une pluralité de fentes dans l'ébauche cylindrique de façon à définir une structure de support unitaire pour soutenir chacun des patins.

30. Procédé selon la revendication 28 ou 29, comprenant de plus l'étape consistant à former une pluralité de fentes dans l'ébauche cylindrique, de façon à former une structure de support pour soutenir le patin dans un mouvement à six degrés de liberté.

31. Procédé selon l'une quelconque des revendications 29 à 30, dans lequel les fentes sont formées par un usinage à électroérosion.

32. Procédé selon l'une quelconque des revendications 28 à 30, dans lequel les fentes sont formées par découpe au laser.

33. Procédé selon l'une quelconque des revendications 28 à 30, dans lequel l'alésage central et les fentes sont formés par coulée.

34. Procédé selon l'une quelconque des revendications 28 à 30, dans lequel l'alésage central et les fentes sont formés par un moulage par injection.

35. Procédé selon l'une quelconque des revendications 28 à 30, dans lequel l'alésage central et les fentes sont formée par un moulage de métal en poudre sous pression avec frittage.

36. Procédé selon l'une quelconque des revendications 28 à 30, dans lequel l'alésage central et les fentes sont formés par extrusion.

37. Procédé selon l'une quelconque des revendications 28 à 36, comprenant de plus l'étape consistant à former une rainure autour de la circonférence de l'ébauche cylindrique, cette rainure se prolongeant radialement vers l'intérieur à partir de l'extérieur de l'ébauche.

38. Procédé selon l'une quelconque des revendications 30 à 39, comprenant de plus l'étape consistant à former des rainures à face symétrique sur les faces circulaires opposées de l'ébauche cylindrique.
